# EUROPEAN PATENT APPLICATION

(11) **EP 2 423 164 A1**
(43) Date of publication of application: **29.02.2012**
(21) Application number: 10173973.8
(22) Date of filing: 25.08.2010
(51) Int. Cl.: C01B 35/04

(54) **General synthesis of metal borides in liquid salt melts**

(71) Applicant: Max-Planck-Gesellschaft zur Förderung der Wissenschaften e.V., 80539 München (DE)
(72) Inventor: Portehault, David Dr., 10557 Berlin (DE); Antonietti, Markus Prof. Dr., 14558 Nuthetal OT Rehbrücke (DE)
(74) Representative: HOFFMANN EITLE

(57) **Abstract**

The present invention relates to a novel process for the manufacture of metal borides by reaction of a metal source and hydride-containing boron source in a molten salt solvent. The present invention also relates to metal boride materials obtainable by this process. The process allows obtaining the desired metal boride without the need for extremely high temperatures, and is capable of providing the metal borides in crystalline form without the need for a subsequent annealing step. The metal boride obtained by the process may be porous, may have a certain morphology, or may be in the form of metal boride particles that are encapsulated in a shell of boron nitride or amorphous boron.

Additionally, the present invention relates to the use of compounds having polarizable anions for adjusting and controlling the particle size and/or morphology of a product produced in a molten salt reaction mixture.

## Description

### SUMMARY

The present invention relates to a novel process for the manufacture of metal borides. Specifically, the present invention relates to a process for the preparation of metal borides from a metal source and a boron source in a molten salt solvent. The present invention also relates to metal boride materials obtainable by this process.

Additionally, the present invention relates to the use of compounds having polarizable anions for adjusting and controlling the particle size and/or morphology of a product produced in a molten salt reaction mixture.

### BACKGROUND OF THE INVENTION

Metal borides are an interesting class of functional inorganic materials, with potential applications in catalysis, mechanics, optoelectronics, information storage, hydrogen storage, medical applications, as superconductors etc. Conventionally, metal borides are prepared by high temperature solid state reactions (typically carried out at temperatures greater than 1,000 °C). The metal and boron sources used in these reactions are typically the elementary metal and elementary boron. Sometimes, also metal salts and oxides are used as starting materials.

However, such a high temperature synthesis leads to either sintered specimen or crude powders, and the synthesis is hardly reliable, Oftentimes, a mixture of different phases is formed. Additionally, such a high temperature synthesis is cumbersome, requires a large amount of energy and is time consuming in view of the slow temperature increase and decrease rates generally applied in such a high temperature synthesis. Oftentimes such high-temperature processes also involve the use of sensitive and/or toxic starting materials.

In recent years, various attempts to synthesise metal borides by different techniques at lower temperatures were made. For instance, attempts were made to synthesise the metal borides by electroplating or by chemical vapor deposition over certain substrates. However, these techniques are not widely applicable, lead to unforeseeable results, and are only capable of providing metal borides that are provided on substrates on which the electroplating or the deposition is carried out. Hence, these methods are not capable of providing non-supported metal borides, i.e. metal borides that are not present on substrates.

In an alternative approach, attempts were made to produce in particular transition metal borides by aqueous chemistry, usually reacting a transition metal salt and a borohydride (especially sodium borohydride) in aqueous solution. This leads however to amorphous, unstructured materials that require an additional annealing step in order to show crystallinity. As one example, the reaction of iron(II) sulfate with sodium borohydride in aqueous solution leads to the formation of amorphous iron boride. In order to obtain a crystalline material, the resulting product has to be annealed at high temperature.

Hence, the synthesis in aqueous media is not capable of providing metal borides having a certain structure and/or morphology, such as high surface area. Moreover, the synthesis in aqueous media may be applicable to some borides, but is not applicable to all possible kinds of borides.

To summarize, the prior art synthesis methods for the production of metal borides are not capable of providing a wide variety of metal borides with foreseeable product properties, at low cost, and with the desired morphology. Specifically, the prior art methods are not capable of providing structured metal borides having a desired shape and/or surface area required for various applications, for instance as catalysts, catalyst support materials, electrically conductive materials, coating materials etc. This is a confinement of technology, as metal borides can in principle show widespread applications, e.g. as fuel cell catalysts or as electrode material, as abrasives, or for novel chemistry. Especially the development of highly dispersed systems with high surface area is a requirement for high catalytic activity and abrasion applications.

Accordingly, there is a need for the provision of a novel process for the preparation of metal borides that allows the production of metal borides in a convenient and environmentally friendly manner and which leads to metal borides having the desired morphology, shape and crystallinity. Moreover, there is a need in the art for the provision of a means for controlling the morphology and shape of metal borides.

### BRIEF DESCRIPTION OF THE DRAWINGS

Fig.1 is a SEM image of nanostructured Ni₂B obtained in Example 1.
Fig. 2 is a SEM image of HfB₂ particles obtained in Example 2.
Fig. 3 shows the XRD pattern of NbB₂ particles obtained in Example 4.
Fig. 4 shows the XRD pattern and a SEM image of EuB₆ particles obtained in Example 6.

### SUMMARY OF THE INVENTION

It was surprisingly found by the present inventors that metal borides, in particular crystalline metal borides, preferably in the form of nanoparticles and nanostructures, can be conveniently synthesized by reaction of a metal source and a boron source in a molten salt. By adjusting the composition of the reaction mixture, not only the composition and structure of the resulting metal boride, but also the particle size and morphology thereof can be controlled.

In comparison to the prior art methods, the process of the present invention provides a very general procedure for the synthesis of a wide variety of metal borides. These compounds are typically obtained as crystalline phases at much lower temperatures than reported in the prior art. Moreover, the process of the present invention enables for the first time the control over the composition and the morphology of the obtained metal boride while maintaining the air stability.

Moreover, the salt used in the synthesis (i.e. the salt that becomes the molten salt forming the reaction medium, that is, the solvent) can generally be recovered and reused. Additionally, the starting materials are typically of low toxicity. Accordingly, the process of the present invention is environmentally friendly.

Thus, in one embodiment the present invention provides the following:
1. A process for preparing a metal boride by reaction of a metal source and a boron source, characterized in that the reaction is carried out using a molten salt as solvent and the boron source is a hydride-containing boron source.
2. Process according to item 1, wherein the metal boride is crystalline and the reaction is performed at 1000 °C or less.
3. Process according to item 1 or 2, wherein the boride is selected from the group consisting of Me₄B, Me₃B, Me₂B, MeB, MeB₂, Me₃B₄, MeB₄, MeB₆, MeB_{12,} preferably Me₂B, MeB, MeB₂ and MeB₄, (wherein Me denotes a metal and B denotes boron), in particular Ni₂B, HfB₂, NbB₂, NiB₂, FeB, FeB₂, CaB₆, EuB₆, CeB₆, MnB₂, MoB₄ and MgB₂.
4. Process according to any of items 1 to 3, wherein the molten salt comprises at least one selected from the group consisting of alkaline metal halides, earth alkaline metal halides, alkaline metal carbonates, earth alkaline metal carbonates, alkaline metal sulfates, earth alkaline metal sulfates, preferably selected from the group consisting of alkaline metal halides and earth alkaline metal halides, and mixtures thereof.
5. Process according to any of items 1 to 4, wherein the molten salt is a eutectic mixture of at least two salts.
6. Process according to any of items 1 to 5, which comprises the following steps (a) to (e):
   (a) mixing a metal source, a hydride-containing boron source and a salt to be used as molten salt solvent, which is present in the solid state at the mixing temperature;
   (b) heating the mixture obtained from step (a) to a temperature higher than the melting point of the salt to be used as molten salt solvent, which temperature is sufficient to form a molten salt reaction mixture, preferably within the range of 300 - 850 °C, and keeping the reaction mixture at this temperature for sufficient time to form a desired metal boride;
   (c) cooling the reaction mixture after step (b) below a temperature at which the reaction mixture solidifies, preferably room temperature, in order to obtain a mixture comprising the solidified salt and the solid metal boride;
   (d) contacting the solid mixture obtained from step (c) with a solvent that is capable of dissolving the salt, but not capable of dissolving the metal boride, and
   (e) separating the solid boride present in the mixture obtained from step (d) from the salt solution formed in step (d) .
7. Process according to any of items 1 to 6, wherein the metal source is selected from the group consisting of metal salts, preferably metal halides (more preferably metal chlorides), metal sulfates, and metal nitrates, metal acetates, and metal acetylacetonates.
8. Process according to any of items 1 to 7, wherein the hydride-containing boron source is selected from the group consisting of alkaline metal borohydrides, preferably lithium borohydride, sodium borohydride and potassium borohydride, more preferably sodium borohydride.
9. Process according to any of items 1 to 8, wherein the reaction mixture comprises a polarizable anion, preferably bromide and iodide, most preferably iodide.
10. Process according to any of items 1 to 9, which yields a nanostructured metal boride, preferably in a "wrapped paper" morphology, as porous solid or as distinct particles.
11. Process according to any of items 1 to 10, which yields a metal boride in the form of particles having a diameter of 2 to 500 nm and/or in the form of a porous solid having a BET surface area of 10 to 800 m²/g.
12. Process according to any of items 1 to 11, wherein the molar ratio of boron contained in the boron source to metal in the metal source, (boron[moles]/metal[moles]) is in the range of 20/1 to 0.5/1, preferably 8/1 to 1/1.
13. Use of a compound having a polarizable anion in a molten salt reaction mixture for adjusting the particle size and/or morphology of a product produced in said molten salt reaction mixture.
14. Use according to item 13, wherein the product is a metal boride and the use is made in a process according to any of items 1 to 12.
15. Metal boride obtainable by a process according to any of items 1 to 12 or by a use according to item 14, which is in the form of particles having a diameter of 2 to 500 nm and/or in the form of a porous solid having a BET surface area of 10 to 800 m²/g_{.}

### DETAILED DESCRIPTION OF THE INVENTION

In the process of the present invention, a metal source and a boron source react with each other in a molten salt that serves as a solvent for the metal source and the boron source. This reaction occurs by a spontaneous reaction of the metal source and the boron source under the reaction conditions. In particular, the reaction is not forced to proceed by applying an electrical potential to any of the reactants. Thus, the process of the present invention does not contain an electroplating step.

Similarly, the process of the present invention serves to synthesize the metal borides in non-supported form. Accordingly, the process of the present invention does not contain a step in which a metal boride is formed or plated on a substrate.

In the following, the respective components of the reaction mixture and the process conditions of the present invention will be described in detail:

### 1. Metal Source

The metal source used in the process of the present invention provides the metal that is contained in the resulting metal boride (for instance Mg in the case of MgB₂). The metal source is not particularly limited and may be any material that is capable of providing the desired metal. Generally, the metal source is selected from the elementary metals (metal in the oxidation state 0), the respective oxides and the respective salts. However, the metal salts are preferred.

The metal salts can preferably be selected from the respective halides, sulfates, carbonates, nitrates, acetates, and acetylacetonates. In one preferred embodiment, the metal source is selected from metal halides, as they do not decompose at higher temperatures in comparison to e.g. nitrates and sulfates. The preferred metal sources are therefore the metal halides, in particular the respective chlorides and bromides. The metal chlorides are most preferred.

In one preferred embodiment, the metal source does not contain oxygen. This avoids potential problems that might occur when highly oxidation sensitive metal borides are to be produced.

In another preferred embodiment, the metal salt is selected from the respective acetates and acetylacetonates, as these organic anions decompose at lower temperatures.

The metal source is preferably solid at room temperature (20 °C) and at ambient pressure (10⁵ Pa), as some liquid materals, such as e.g. TiCl₄, are excessively reactive and may react vigorously with the boron source.

### 2. Boron Source

The boron source used in the process of the present invention is not particularly limited, as long as it can provide boron for the formation of the boride and is a hydride-containing boron source. In the present invention, the term "hydride-containing boron source" denotes jointly boranes and borohydrides. Examples of preferred boranes include B₁₀H₁₄ and K₂B₁₂H₁₂, and the preferred borohydrides include alkali metal borohydrides.

The reason for the use of such a hydride-containing boron source is as follows: If the boron source could be freely selected from other boron-containing compounds, for example elementary boron (boron in the oxidation state 0, B⁰), boron salts, such as boron halides, and boron-containing oxides, such as B₂0₃, then an additional reducing agent would be needed to reduce the metal ion to the oxidation state 0. Moreover, one would have to pay attention to the fact that boron has a strong affinity to oxygen. Consequently, if a boron source other than a hydride-containing boron source were used, an additional reducing agent, such as Na⁰, could be necessary, in particular if B₂0₃ or B⁰ were used as boron source. Accordingly, it is an advantage of the process of the present invention that such an additional reducing agent is not required, leading to a simpler process that can be run at lower costs.

Thus, in the present invention boranes or borohydrides are used in order to avoid the use of an additional reducing agent. Borohydrides are more preferred, and particular preferred are the earth alkaline metal borohydrides and the alkaline metal borohydrides. Even more preferred are the alkali metal borohydrides (lithium, sodium, potassium, and cesium borohydride), with sodium borohydride and potassium borohydride being most preferred. The by far most preferred alkali metal hydride is sodium borohydride, as it is available at low cost.

If a borane is used, its form is not particularly limited and can be any of close, nido, arachno, hypho and clado or other complex forms. Out of these, the boranes having a greater number of electrons, such as nido, arachno and hypho boranes, are preferred.

As mentioned above, the use of a borane or borohydride makes the use of an additional reducing agent superfluous. Accordingly, the reaction system may essentially be a three-component system consisting of the boron source (the borane or borohydride), the metal source and the salt to be used as molten salt solvent, i.e. the reaction mixture consists of these three components and optionally an additive described below, which is preferably a compound having a polarizable anion. In the absence of a highly reactive reducing agent (such as elementary sodium), the process is easier to perform and does not rely on highly dangerous chemicals.

Preferably, the boron source is a solid at room temperature and ambient pressure.

### 3. Molten Salt

The salt used as molten salt solvent in the process of the present invention is not particularly limited, as long as it can solvate, in the molten state, the metal source and the boron source and/or can mediate a reaction between them that is necessary for the formation of the desired metal boride. The employed salt is typically solid at room temperature. In this case, the generation of molten salts with a chemically stable liquidus relies on elevated temperatures, as known from for instance glass manufacturing.

The melting point of the salt used as molten salt is preferably 100 °C or more, more preferably 200 °C or more, and even more preferably 300 °C or more at ambient pressure (10⁵ Pa). The upper limit of the melting point of the molten salt is limited only by the reaction conditions, and any salt can be employed as long as it is liquid under reaction conditions. Thus, typically the salts used as molten salt in the process of the invention have a melting point of less than 1000 °C, preferably 850 °C or less, more preferably 700 °C or less, even more preferably 600 °C or less, and most preferably 500 °C or less.

Preferred examples of salts that can be employed in the process of the present invention include alkaline metal salts and earth alkaline metal salts. The anion of the salt is not particularly limited and can be any anion, however, inorganic anions, sulfates and carbonates are preferred due to their stability at high temperatures. Accordingly, the salts used in the present invention are preferably selected from alkaline metal halides (in particular chlorides and bromides), alkaline metal carbonates, alkaline metal sulfates, alkaline metal nitrates, earth alkaline metal halides (preferably chlorides and bromides), r earth alkaline metal sulfates, earth alkaline metal carbonates and earth alkaline metal nitrates. It is preferred that both the anion and the cation forming the salt are inorganic in nature (i.e. do not contain carbon). The most preferred salts to be used for the formation of the molten salt are alkaline metal halides and earth alkaline metal halides and mixtures thereof.

As boron has a strong afffinity to oxygen, the salt used as molten salt solvent preferably does not contain oxygen in order to facilitate the formation of the desired metal boride.

The above explanations and definitions regarding the melting point refer to the water-free (anhydrous) forms of the respective salts. Thus, if a specific salt exists in anhydrous form as well as in forms with crystal water, the above definitions apply to the anhydrous form.

In order to allow an easy recovery of the metal boride after the reaction, the salt forming the molten salt under reaction conditions is preferably water-soluble. In this case, the formed metal boride, which is typically not soluble in water, can be recovered from the reaction mixture by the addition of water or an aqueous solvent and the separation of the insoluble metal boride from the aqueous salt solution. In the present invention, the term "water-soluble" denotes that the salt is soluble in an amount of 20 g or more per 1 liter of water at 20 °C. The water-soluble salt is preferaby soluble in an amount of 100 g or more per 1 liter of water at 20 °C.

The molten salts can be used as one species, or can be used in combination of two or more species. In the latter case, preferably an eutectic mixture of two salts is used in order to allow the formation of a molten salt at lower temperatures. In the present invention, the term "eutectic mixture" denotes a mixture of two or more salts that have a lower melting point than any of the constituent salts forming the mixture. The eutectic mixture referred to here is a mixture of salts that form the molten salt solvent under reaction conditions and does neither include the boron source nor the metal source.

Among the above, alkaline metal halides and earth alkaline metal halides are preferred, and alkaline metal halides (in particular chlorides) are more preferred. The most preferred metal salt is an eutectic mixture consisting of lithium chloride and potassium chloride in an ratio of 45 - 50 to 55 - 50 wt.% (45-50 wt.% LiCl + 50-55 wt.% KC1), r which forms an eutectic mixture having a melting point of around 355 °C.

The salt forming the molten salt under reaction conditions is a component that is present in addition to the boron source. Thus, the salt forming the molten salt under reaction conditions does preferably not contain boron. It may contain the metal forming the metal boride, whilst in a preferred embodiment it also does not contain the metal forming the metal boride. Thus, preferably the salt forming the molten salt under reaction conditions does neither contain boron nor the metal contained in the obtained metal boride.

The salt forming the molten salt may contain an anion that is also present in the boron source or the metal source, if the boron source and/or the metal source are themselves a salt. For instance, the molten salt may be formed from potassium chloride, and nickel chloride may be employed as metal source. However, in such a case wherein the salt forming the molten salt under reaction conditions and the metal and/or boron source should have a common anion, preferably at least the cation of the salt forming the molten salt and the salt that is used as metal source or boron source, respectively, are different, so that the starting materials comprise at least three different materials. In other words, preferably the metal source and the boron source, on the one hand, and the salt forming the molten salt, on the other hand, are all chemically different species (e.g. salts). Accordingly, for instance a process wherein MgCl₂ and NaBH₄ are reacted to form MgB₂ in the absence of an additional salt that forms the molten salt is preferably not a process in accordance with the present invention, even if the process should be conducted at a temperature above the melting point of MgCl₂-Conversely, a process wherein MgCl₂ and NaBH₄ are reacted to form MgB₂ in the presence of an additional salt that forms the molten salt (e.g. KC1) is a process in accordance with the present invention.

In a preferred embodiment, the metal source is a salt that comprises the same anion as the salt used for the formation of the molten salt solvent (e.g. NiC1₂ is used as metal source, and KC1 is used as molten salt solvent). This applies also if a mixture of molten salts is used (e.g. the above KC1/LiC1 mixture), r while in this case the metal source may only have a common anion with one of the salts making up the molten salt mixture (e.g. NiC1₂ is used as metal source, and a KCl/KBr mixture is used as molten salt solvent).

In order to allow conducting the reaction under a great variety of reaction conditions and in various reaction containers, the salt is preferably not a corrosive or highly reactive salt, such as corrosive aluminum trichloride. Thus, preferably the salt is not aluminum trichloride. Similarly, strongly basic melts, such as carbonate and hydroxide melts, may attack a number of container materials, and hence the salt forming the molten salt under reaction conditions is preferably not a carbonate or a hydroxide.

### 4. Additives

The reaction mixture comprising the metal source, the boron source and the molten salt may additionally comprise one or more additives for controlling the particle size and/or morphology of the resulting metal boride.

The additive is preferably a compound having a polarizable anion, such as an iodide. Whilst the morphology-controlling effect of such anions is not fully understood, it is believed that the polarizable ions act as a kind of high temperature "surfactant" which interacts with the particle surface. Specifically, it is observed that the particle size usually decreases with increasing amounts of such polarizable ions.

The polarizability of an ion is dependent on its size, relative to its charge. As a general rule, for anions having the same negative charge (e.g. -1), bigger anions are more polarizable than small anions. Thus, for an additive having an anion having a single negative charge (-1), the polarizable anion preferably has an ionic radius of 195 picometer (pm) or more, preferably 210 pm or more, and most preferably 220 pm or more, but 350 pm or less. The iodide anion To has an ionic radius of 220 pm, based on the ionic radius of O²⁻ of 140 pm determined theoretically by Pauling for a coordination number of 6. The above definition of ionic radii is based on this standard.

A preferred additive is thus an iodide, and potassium and sodium iodide are most preferred.

Hence, in one aspect the present application provides the use of such an additive for controlling the particle size and/or morphology of products produced in molten salts, in particular the borides prepared according to the process of the present invention. The amount of the additive is not particularly limited, but is generally in the range of 1 to 100, preferably 5 to 50, more preferably 10 to 40 moles, relative to 1 mol of metal in the metal source. If the additive is a compound having more than one polarizable anion (e.g. two, such as in MgI₂) , the above molar ratio refers to the molar amount of polarizable anions relative to the amount of metal in the metal source ([moles of polarizable anions]/[moles of metal]).

### 5. Process Parameters

In the process of the present invention, the metal source, the boron source and the molten salt form a reaction mixture in which the respective boride is formed. The reaction is preferably performed at less than 1,000 °C, more preferably 900 °C or less, still more preferably 850 °C or less, and most preferably 800 °C or less. The lower limit of the temperature is not particularly limited, as long as a molten salt is formed, and thus depends crucially on the melting point of the salt used. Thus, any temperature can be used as long as it is higher than the melting point of the salt.

The temperature employed for the process of the present invention has a great influence on the crystallinity of the resulting products and also on the structure thereof. The skilled person will understand that at higher temperatures the more thermodynamically stable product is formed, whereas performing the reaction at lower temperatures may allow the formation of less thermodynamically stable species (kinetic control). Whilst thus the lower limit of the reaction temperature cannot be specified for all possible products, it will typically be 350 °C or higher, preferably 400 °C or higher, more preferably 450 °C or higher, even more preferred 500 °C or higher, and most preferably 550 °C or higher. Needless to say, the process can also be performed at a temperature of 600 °C or higher or 650 °C or higher if a more thermodynamically stable product is desired.

As already explained above, the reaction mixture comprises (or consists of) the hydride-containing boron source, the metal source, and the molten salt, and optionally one or more additives. Thus, preferably at least three components that are three different chemical species are present in the reaction mixture. According to the present invention, preferably neither the metal source nor the boron source may be regarded as salt forming the molten salt under reaction conditions. Accordingly, a process in which only a metal source and a boron source are combined and heated to a temperature at which at least one of these two components is in the liquid state is preferably not a method in accordance with the present invention, even if one or both of the boron source and the metal source should be a salt. Moreover, the molten salt used as solvent in the present application is not a molten metal.

In the present invention, the molten salt is preferably used as the only solvent. Thus, according to a preferred embodiment, the reaction is performed in the absence of water and in the absence of an organic solvent, such as benzene.

In the process of the present invention, the molten salt acts as solvent for the boron source and the metal source. Accordingly, in order to obtain a sufficient solvating effect, the molar amount of the salt forming the molten salt preferably exceeds the total molar amount of metal and boron, i.e. [molar amount of salt forming the molten salt/total molar amount of (metal in the metal source + boron in the boron source)] > 1. More preferably, the molar amount of salt forming the molten salt is greater than the total molar amount of metal in the metal source and boron in the boron source by a factor of 2 or greater, still more preferably by a factor of 4 or greater, and most preferably by a factor of 5 or greater (i.e. more preferably [molar amount of salt forming the molten salt/total molar amount of (metal in the metal source + boron in the boron source 2, still more preferably ≥ 4, and most preferably ≥ 5).

The upper limit of the amount of the salt forming the molten salt is not particularly limited. However, in order to facilitate a rapid reaction between the metal source and the boron source, the formed solution with the molten salt as solvent is preferably not too diluted. Thus, preferably the molar amount of salt forming the molten salt exceeds the total amount of metal in the metal source and boron in the boron source by a factor of 100 or less, more preferably 50 or less, even more preferably 20 or less, and most preferably 10 or less (i.e. preferably [molar amount of salt forming the molten salt/total molar amount of (metal in the metal source + boron in the boron source)] ≤ 100, more preferably < 50, even more preferably < 20, and most preferably ≤ 10).

The process of the present application can be performed under ambient pressure, but can also be performed under pressure. Thus, the process of the present application may be run in an autoclave, while this is not necessary. From a commercial point of view, the process is preferably not run in an autoclave, as such equipment is expensive. This allows conducting the process using a simple apparatus, and thus the process of the present application is, in one preferred embodiment, conducted under normal pressure (10⁵ Pay). In this embodiment, the process does not require the use of a complicated and expensive apparatus, and can be run using simple equipment.

It may in some cases also be advantageous to exclude the presence of oxygen or air, in particular if the product is sensitive to moisture and/or oxygen. Accordingly, in another preferred embodiment, the reaction is performed under inert gas (such as nitrogen or argon), e.g. in a glove box or in an oven that has been purged with the working gas for some time, e.g. 1, 2, or 3 hours. However, also in this case the typical insensitivity of the starting materials towards moisture and/or oxygen allows handling the starting composition (e.g. metal source, boron source, and salt to be used as molten salt solvent) under normal atmosphere (air) prior to the reaction, e.g. for up to about 1 hour, before commencing the reaction by heating the mixture to the desired reaction temperature under inert gas. This provides an advantage over prior art processes that use oxygen- and/or moisture-sensitive starting materials, such as elementary sodium as reducing agent or corrosive AlCl₃ as molten salt, which are preferably not used in the process of the present invention.

In a process wherein an excess of boron is used (i.e. wherein the molar ratio [boron/metal] is 2 or greater) and wherein the reaction temperature is high, such as 750 °C or higher, preferably 800 °C or higher, and more preferably 900 °C or higher, the choice of the inert gas may also have an influence on the formation of byproducts resulting from a reaction with e.g. nitrogen. For instance, if nitrogen is used as inert gas in such a process, a shell of boron nitride is formed around the metal boride particles. This allows obtaining an interesting material, wherein the properties of the metal boride (e.g. superparamagnetism, ultrahardness, thermoelectric properties and low superconducting temperature of e.g. NbB₂, MoB₄, CeB₆ and MgB₂, respectively) are combined with the hardness of boron nitride.

Hence, in order to provide such materials, in a preferred embodiment of the process of the present invention the reaction is run at a reaction temperature of 750 °C or higher, preferably 800 °C or higher, and more preferably 900 °C or higher, under nitrogen, using a starting composition wherein the molar ratio [boron/metal] is 2 or greater. This embodiment leads to a material wherein metal boride particles, preferably NbB₂, MoB₄, CeB₆ and MgB₂, are encapsulated in a boron nitride shell.

Conversely, if, in a process wherein an excess of boron is used (i.e. wherein the molar ratio [boron/metal] is 2 or greater) and wherein the reaction temperature is 750 °C or higher, preferably 800 °C or higher, and more preferably 900 °C or higher, argon is used as inert gas instead, the formed metal boride particles are encapsulated in an amorphous boron shell, which protects them from oxygen and moisture.

Hence, in another preferred embodiment of the process of the present invention, the reaction is run at a reaction temperature of 750 °C or higher, preferably 800 °C or higher, and more preferably 900 °C or higher under argon. This embodiment leads to a material wherein metal boride particles, preferably NbB₂, MoB₄, CeB₆ and MgB₂, are encapsulated in a shell of amorphous boron.

The reaction may also be performed under vacuum. This can be accomplished e.g. by filling the starting materials (metal source, boron source and salt that forms the molten salt under reaction conditions, and optionally an additive) into a vial, evacuating the vial and then sealing the vial, for instance by melting the vial material.

Similarly, it may be advantageous to exclude the presence of water. For this purpose, the starting materials are preferably dried before the reaction, e.g. by heating to approx. 120 - 150 °C for 2 - 72 hours and/or applying a vacuum.

In a preferred embodiment, the process of the present application involves the following steps (a) to (e):
(a) mixing and optionally grinding a metal source, a boron source and a salt to be used as molten salt solvent, which is present in the solid state at the mixing temperature;
(b) heating the mixture obtained from step (a) to a temperature higher than the melting point of the salt to be used as molten salt solvent, which temperature is sufficient to form a molten salt reaction mixture, preferably within the range of 300 - 850 °C, more preferably 500 - 800 °C, and keeping the reaction mixture at this temperature for sufficient time to form a desired metal boride;
(c) cooling the reaction mixture after step (b) below a temperature at which the reaction mixture solidifies, preferably room temperature, in order to obtain a solidified mixture comprising the salt and the metal boride; and
(d) contacting the solid mixture obtained from step (c) with a solvent that is capable of dissolving the salt, but not capable of dissolving the metal boride, and
(e) separating the solid boride present in the mixture obtained from step (d) from the salt solution formed in step (d).

In this embodiment, the formed metal boride can be easily separated from the salt that forms the molten salt under reaction conditions and any optional additive, and hence this represents a preferred embodiment of the present invention.

The solvent used in step (d) is not particularly limited, as long as it is capable of dissolving the salt that formed the molten salt solvent, but not capable of dissolving the metal boride. Preferred examples of such solvents include water and water-miscible solvents, such as acetone, tetrahydrofuran and alcohols (e.g. methanol, ethanol, isopropanol, tert-butanol).

More preferably, the solvent used in step (d) is water or an aqueous solution or aqueous mixture of solvents (containing water and an organic solvent mentioned above), r and the salt forming the molten salt under reaction conditions is water-soluble. This allows an easy separation of the formed metal boride from the reaction mixture by dissolving the molten salt solvent, leaving the insoluble metal boride.

A similar approach may be taken if the formed metal boride is water-sensitive. In this case, another solvent than water may be used, which is capable of dissolving the salt used as molten salt solvent, but not the formed metal boride. In such case, i.e. when the formed metal boride is water-sensitive, the solvent may be a polar protic or aprotic solvent, such as an alcohol (such as methanol, ethanol, isopropanol, tert.-butanol etc), a ketone (such as acetone), or an ether (such as THF).

The solvent used in step (d) may contain additives that facilitate the dissolution of the components other than the formed metal boride. In particular if the salt forming the molten salt under reaction conditions is a carbonate, the solvent used in step (d) may be a diluted acid, such as hydrochloric or sulfuric acid having a concention in the range of 0.1 - 2 moles per liter.

In the present invention, the molar ratio between the metal in the metal source and the boron in the boron source is preferably selected such as to resemble the desired stoichiometry of the desired metal boride. However, it was observed that excess boron leads in many cases to the formation of the corresponding diboride, MeB₂, tetraboride MeB₄, or hexaboride MeB₆, whereas the formation of the respective boride of the general formula MeB was observed when the molar ratio of metal to boride was close to 1:2. Similarly, the formation of metal borides of the general formula Me₂B was observed when the molar ratio was close to 1.

Accordingly, the molar ratio of boron to metal [boron/metal] is preferably from 20/1 to 0.5/1, more preferably 8/1 to 1/1. If the process of the present invention is a process for the production of a metal boride of the general formula MeB, the molar ratio of boron to metal [boron/metal] is preferably equal to or smaller than 4/1, and is more preferably in the range of 2/1 to 1/1. If the process of the present invention is a process for the production of a metal boride of the general formula Me₂B, the molar ratio of boron to metal [boron/metal] is preferably equal to or smaller than 1/1 to 1/4, more preferably smalller than 1/1 to 1/2.

The process of the present invention is preferably capable of providing the desired metal boride in a crystalline form without the need for an additional annealing step. Accordingly, the process of the present invention preferably does not comprise an annealing step in which the metal boride, formed by the reaction in the molten salt solvent, is subjected to a high temperature treatment in the absence of the molten salt solvent at a temperature of 500 °C or higher, preferably 600 °C or 700 °C or higher, more preferably 800 °C or higher, and most preferably 900 °C or higher and wherein an amorphous (non-crystalline) product is converted into a crystalline product.

Thus, in a preferred embodiment the process of the present invention is a process for the production of a crystalline metal boride comprising the reaction of a metal source and a boron source in a molten salt at a temperature of 500 - 800 °C, which process does not include subjecting the metal boride to a subsequent annealing step at a temperature of 500 0 °C or higher in the absence of the molten salt.

### 6. The formed metal boride

The process of the present invention is capable of providing a wide variety of metal borides MeₓB_{y}. Herein, Me denotes a metal, B denotes boron, and x and y are independently integers of 1 or greater, preferably 1 to 7, more preferably 1 to 4, and most preferably 1 or 2.

Specific examples of metal borides that can be produced by the process of the present invention are set forth below: Me₄B; Me₃B (Me = Tc, Re, Co, Ni, Pd) ;
Pd₅B₂ ;
Me₇B₃(Me = Tc, Re, Ru, Rh);
Me₂B (ME = Ta, Mo, W, Mn, Fe, Co, Ni);
CrₛB₃
Me₃B₂(V, Nb, Ta)
Me₃B₄ (Me = Ti, V, Nb, Ta, Cr, Mn, Ni)
MeB (Me = Ti, Hf, V, Nb, Ta, Cr, Mo, W, Mn, Fe, Co, Ni) ;
MeB₂ (Me = Mg, Al, Sc, Y, Ti, Zr, Hf, V, Nb, Ta, Cr, Mo,
W, Mn, Tc, Re, Ru, Os, U, Pu) ;
Me₂B₅ (Me = Ti, W, Mo) ; i
MeB₄(Me = Ho, Er, Tm, Lu, Ca, Y, Mo, W, Th)
MeB₆ (Me = Ca, Sr, Ba, Eu, Yb, La, Lanthanoide, Th)

Out of these, metal borides of the general formula Me₂B, MeB, MeB₂, MeB₄ and MeB₆ are preferred, and those of formula MeB₂ and MeB₆ are more preferred. Herein, Me preferably represents a metal selected from the earth alkaline metals, more preferably Ca, Mg, Ba, most preferably Mg, or the rare earth metals, more preferably La, Eu, Ce, most preferably Ca. In another preferred embodiment, the metal is in the formula Me₂B, MeB and MeB₂ is a transition metal.

Specific examples of preferred metal borides are Ni₂B, HfB₂, NbB₂, Ni₃B₄, FeB, FeB₂, CaB₆, EuB₆, CeB₆, MnB₂, MoB₄ and MgB_{2.} Out of these, NbB₂ and MgB₂ are more preferred, and NbB₂ is most preferred.

The metal borides obtainable by the process of the present invention are preferably crystalline. The term "crystalline", as used herein, denotes that the materials have powder XRD patterns showing well defined diffraction peaks. The term "well defined diffraction peak" denotes a diffraction signal having a FWHM (full width at half maximum), i.e. the width of the peak at 50% of its height over baseline, of at most 3° in 2 theta (29), preferably at most 2° in 2 theta.

For very small particles having a size of less than 2 nm, it may be difficult to obtain a meaningfull diffraction pattern using powder XRD. For such materials, an analysis by high resolution transmission electron microscopy (HRTEM) may be more appropriate. Thus, alternatively, the term "crystalline" denotes that the material gives HRTEM images having well-defined diffraction reflections. The term "well-defined diffraction reflections" denotes the observation of lattice fringes over a range of at least 1 nm.

In the present invention, a metal boride is considered crystlline even if only one of the measurements above satisfies the criterion of "crystalline". In other words, a material is considered crystalline if it shows well-defined diffraction peaks in a powder XRD analysis or well-defined diffraction reflections in a HRTEM analysis. Preferably, the material is crystalline according to both criteria (i.e. shows well-defined diffraction peaks in a powder XRD, and also shows well-defined diffraction reflections in a HRTEM analysis) .

The metal borides obtainable by the process of the present invention are preferably porous materials having a large surface area. Thus, the materials preferably have a BET surface area of 10 m²/g or greater, more preferably 20 m²/g or greater, and most preferably preferably 50 m²/g or greater. The upper limit of the surface area is not particularly limited, but is usually 800 m²/g or less or 600 m²/g or less.

In addition to having a surface area as described above, the metal borides preferably have a total pore volume in the range of 0.1 - 4 cm³/g, more preferably 0.3 -2.5 cm³/g, and most preferably 0.5 -2 cm³/g.

The surface area and pore volume can be measured by analyzing a sample of approx. 0.1 g of metal boride using a conventional surface analyzer, e.g. SA3100™ of Coulter, using a full nitrogen adsorption-desorption profile and pretreating the sample by degassing at 120 °C for 2 hours. Herein, the BET surface is calculated from the adsorption isotherm.

The metal borides obtainable by the process of the present invention are preferably nanostructured materials. This includes particles preferably having a diameter of 2 to 500 nm, more preferably 10 - " 50 nm.

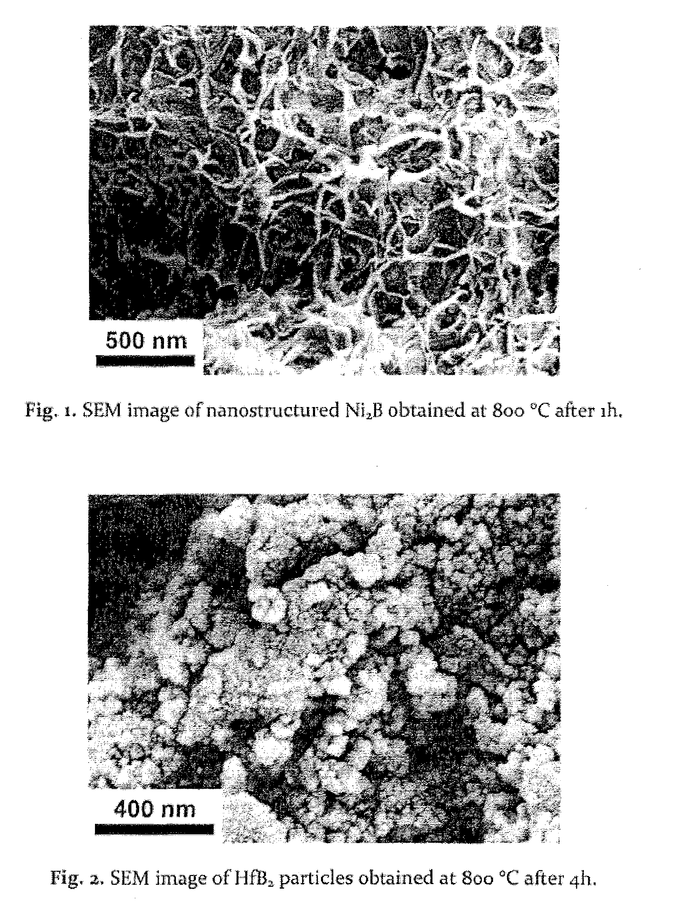

In a preferred embodiment, the process of the present invention leads to nanostructured materials having a "wrapped paper" morphology. An example of this wrapped paper morphology is shown in Fig 1, showing the material obtained in Example 1. The material having this "wrapped paper" morphology preferably has a particle size, surface area and total pore volume within the ranges mentioned above. It has been found that this "wrapped paper" morphology is formed when the formed metal boride is contacted with water (e.g. in the process step (d) of the process of claim 5). In this case, the metal boride particles having a size of e.g. 100 - 500 nm, which were formed during the reaction of the metal source and the boron source in the molten salt solvent, react partially with water and combine. This leads e.g. in the case of Ni₂B as metal boride to the formation of a nanosheet having a (Ni₂B particle)-(Ni(OH)₂) core-shell-structure. The nanosheet preferably has a thickness of 20 nm or less, more preferably 10 nm or less.

The duration of the reaction forming the metal boride in the molten salt solvent, using the boron source and the metal source as substrates, is not particularly limited, but has to be sufficient to enable the formation of the metal boride. Preferably, the reaction is conducted for 0.5 - " 10 hours, more preferably 1 - 6 hours.

The process is generally conducted by mixing the metal source, the boron source and the salt that becomes the molten salt, heating the formed mixture to the desired temperature where the salt forms the molten salt, keeping the reaction mixture at the desired temperature for the desired time, e.g. 1 - 6 hours, and cooling the reaction mixture to ambient temperature, where it solidifies, followed by recovery of the formed metal boride (e.g. by dissolving the salts other than the formed metal boride). The heating and cooling rate is not particularly limited and depends on the apparatus used, but is generally 10 °C/min or more, more preferably 20 °C/min or more. Alternatively, the reaction mixture can be simply put into an oven that has been pre-heated or is then heated to the desired temperature, followed by removal from the oven after the desired reaction time.

### 7. Preferred Embodiments

The skilled person will be aware that various preferred embodiments described above can be combined. For instance, a preferred temperature range can be combined with a preferred salt forming the molten salt under preferred reaction conditions and/or the formation of a preferred metal boride. In order to illustrate such combinations, in the following preferred combinations of features are described as preferred embodiments of the present invention, which are not intended to limit the present invention in any way:
(A) A process for preparing a metal boride by reaction of a metal source and a hydride-containing boron source, characterized in that the reaction is carried out using a molten salt as solvent at a temperature of 1000 °C or less, preferably 500 to 850 °C, wherein the molten salt is selected from alkaline metal halides and earth alkaline metal halides and mixtures thereof, preferably an eutectic mixture thereof, more preferably an eutictic mixture of KCl and Lid, and wherein the formed metal boride is of the general formula Me₂B, MeB, or MeB₂, MeB₄ or MeB₆..
   (A-1) A process according to (A), wherein the formed metal boride is crystalline.
   (A-2) A process according to (A) or (A-1), wherein the metal boride is NbB₂, MoB₄, or CeB₆.
   (A-3) A process according to (A) or (A-1), wherein the metal boride is MgB₂ and the salt used as molten salt solvent does not contain Mg.
   (A-4) A process according to (A), (A-1), (A-2) or (A-3), wherein the hydride-containing boron source is a borohydride, more preferably sodium borohydride and/or lithium borohydride.
   (A-5) Process according to (A), (A-1), (A-2), (A-3) or (A-4), wherein the metal source is a metal salt, preferably a metal halide, more preferably a metal chloride.
(B) A process for preparing a metal boride by reaction of a metal source and a hydride-containing boron source, characterized in that the reaction is carried out using a molten salt as solvent at a temperature of 900 °C or less, preferably 500 to 850 °C, wherein the boron source is selected from alkaline metal borohydrides, preferably selected from sodium borohydride and lithium borohydride, and wherein the molten salt is selected from alkaline metal halides and earth alkaline metal halides and mixtures thereof, preferably an eutectic mixture thereof, more preferably an eutectic mixture of KC1 and LiCl.
   (B-1) Process according to (B), wherein the process is for the production of a crystalline metal boride of the general formula Me₂B, MeB or MeB₂, and wherein the molar ratio of boron to metal present in the starting materials [boron/metal] is 8/1 to 0,5/1.
   (B-2) Process according to (B) or (B-1), wherein the metal source is a metal halide, preferably a metal chloride.
   (B-3) Process according to (B-1) or (B-2), wherein the process is for the production of MgB₂ and an Mg salt, preferably MgCl₂, is employed as metal source.
   (B-4) Process according to (B), (B-1), (B-2) or (B-3), wherein the amount of salt forming the molten salt is greater by a factor of 2 or greater than the total molar amount of metal in the metal source and boron in the boron source.
(C) A process for preparing a metal boride by reaction of a metal source and a boron source, characterized in that the reaction is carried out using a molten salt as solvent at a temperature of 1000 °C or less, wherein the boron source is a borohydride, preferably sodium or lithium borohydride, the molten salt is formed from an alkaline metal halide or a mixture of alkaline metal halides, preferably an eutectic mixture of KCl and LiCl, and wherein an additive for adjusting the morphology of the resulting metal boride is contained in the reaction mixture.
   (C-1) Process according to (C), wherein the additive is a compound having a polarizable anion with an ionic radius of 210 pm or more, which is preferably iodide (I-).
   (C-2) Process according to (C) or (C-1), wherein the formed metal boride is crystalline and of the general formula Me₂B, MeB or MeB₂.
   (C-3) Process according to any of (C), (C-1), and (C-2), wherein the amount of salt forming the molten salt is greater by a factor of 2 or greater than the total molar amount of metal in the metal source and boron in the boron source.

### 8. EXAMPLES

The present invention is further illustrated by the following Examples, which are not intended to limit the present invention in any way:

### Example 1

2 mmol of nickel chloride and 2 mmol of NaBH₄ are mixed with 2.5 g of a mixture for the eutectic salt melt LiCl:KC1 (45:55 wt.%) and grounded under exclusion of water and oxygen to a fine powder. The mixture is molten in a porcelain crucible and heated for 1 to 4 hours at temperatures between 500 °C and 900 °C under nitrogen flow. After cooling, the salt melt is removed by simple dissolution in water, and an homogenous Ni₂B compound with a "wrapped paper" morphology is obtained. The Ni:B ratio in the product is 1.9, in agreement with the ideal composition. Fig. 1 shows a SEM image of the obtained material.

### Example 2

2 mmol of hafnium(IV) chloride and 8 mmol of NaBH₄ are mixed with 2.5 g of a mixture for the eutectic salt melt LiCl:KCl (45:55 wt.%) and grounded under exclusion of water and oxygen to a fine powder. The mixture is molten in a porcelain crucible and heated for 1 - 4 hours at temperatures between 800 °C and 900 °C. After cooling, the salt melt is removed by simple dissolution in water, and rather clean and homogenous HfB₂ particles with 20 nm diameter are obtained. The surface area of the material is 30 m²/g. Fig. 2 shows a SEM image of the obtained material.

### Example 3

2 mmol of hafnium(IV) chloride and 8 mmol of NaBH₄ are mixed with 2.5 g of a mixture for the eutectic salt melt LiI:KI (58:42 wt.%) and grounded under exclusion of water and oxygen to a fine powder. The mixture is molten in a porcelain crucible and heated for 1 - 4 hours at temperatures between 800 °C and 900 °C. After cooling, the salt melt is removed by simple dissolution in water, and HfB₂ particles are obtained. The surface area of the material is 60 m²/g. Changing the eutectic chloride salt as solvent (example 2) for more polarizable ions such as iodide stabilizes small particle size and leads to higher surface areas.

### Example 4

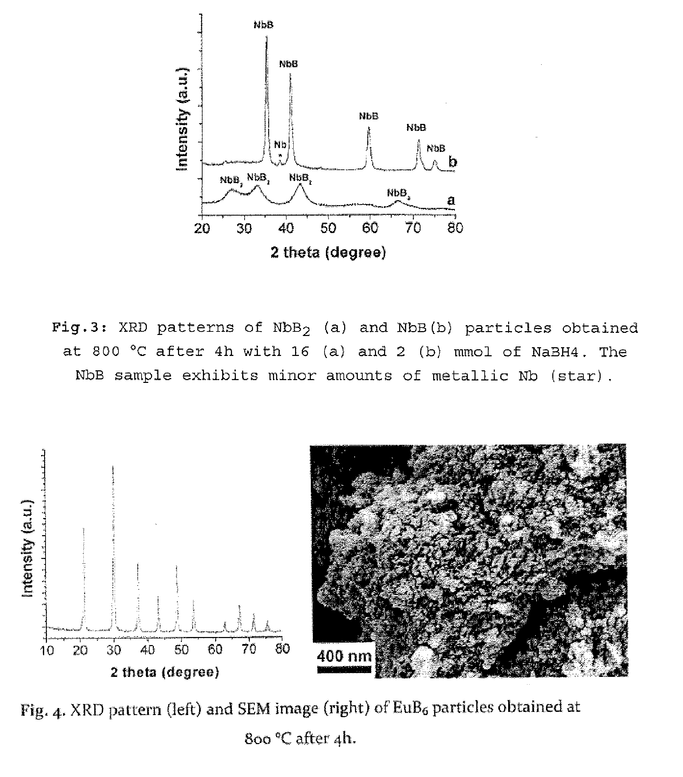

2 mmol of niobium(V) chloride and 16 (a) or 2 (b) mmol of NaBH₄, are mixed with 2.5g of a mixture for the eutectic salt melt LiC1:KC1 (45:55 wt.%) and grounded under exclusion of water and oxygen to a fine powder. The mixture is molten in a porcelain crucible and heated for 1 - 4 hours at 800 °C under nitrogen flow. After cooling, the salt melt is removed by simple dissolution in water. Changing the initial reactant ratio enables to control the final structure and composition of the particles between homogenous NbB₂ (a) and NbB (b) compounds. The XRD patterns of the materials are shown in Fig. 3.

### Example 5

2 mmol of niobium(V) chloride and 16 mmol of NaBH₄ are grounded with 0 (a), 16 (b), or 40 (c) mmol of Kl, and 2.5 g of the eutectic salt melt LiCl:KC1 (45:55 wt.%) under exclusion of water and oxygen. The fine powder is transferred in a porcelain crucible and heated for 4 hours at temperatures between 800 °C and 900 °C. After cooling, the salt melt is removed by simple dissolution in water under sonication. Rather clean and homogenous NbB₂ particles with a total surface area of 140 (a), 150 (b), or 220 (c) m²/g are obtained. Therefore, addition of salts containing highly polarizable and easily oxidized ions such as iodide leads to stabilization of the small particles as well as better dispersion.

### Example 6

2 mmol of europium(III) chloride and 16 mmol of NaBH₄ are mixed with 2.5 g of a mixture for the eutectic salt melt LiCl:KC1 (45:55 wt.%) and grounded under exclusion of water and oxygen to a fine powder. The mixture is molten in a porcelain crucible and heated for 1 - 4 hours at 800 °C. After cooling, the salt melt is removed by simple dissolution in water, and rather clean and homogenous EuB₆ particles with 30 nm diameter are obtained. Fig. 4 shows the XRD pattern and a SEM image of the material.

### Example 7

2 mmol of manganese(II) chloride and 2 mmol of NaBH₄ are mixed with 2.5 g of a mixture for the eutectic salt melt LiCl:KC1 (45:55 wt.%) and grounded under exclusion of water and oxygen to a fine powder. The mixture is molten in a porcelain crucible and heated for 1 - 4 hours at 800 °C under nitrogen flow. After cooling, the salt melt is removed by simple dissolution in water, and rather clean and homogenous MnB₂ particles are obtained, with a total surface area of 250 ₘ2/g.

### Example 8

This example is carried out essentially in the same way as Example 4, except that the temperature is changed to 900 °C. Conducting the process at this temperature under nitrogen flow led to the formation of NbB₂ particles having a diameter of 5 nm embedded in a boron nitride shell with a thickness of 2 nm.

### Example 9

This example is carried out essentially as Example 8, except that the gas was changed to argon. Conducting the process at 900 °C under argon flow led to the formation of NbB₂ particles having a diameter of 5 nm embedded in a shell of amorphous boron having a thickness of 2 nm.

### Example 10

1 mmol of molybdenum (V) chloride and 12 mmol of NaBH₄ are mixed with 2.5 g of a mixture for the eutectic salt melt LiCl:KCl (45:55 wt.%) and grounded under exclusion of water and oxygen to a fine powder. The mixture is molten in a porcelain crucible and heated for 1 - 4 hours at 800 °C under argon flow. After cooling, the salt melt is removed by simple dissolution in water. Crystalline MoB₄ nanoparticles of 2 nm diameter are obtained, embedded in an amorphous boron shell with a thickness of 2 nm.

Table 1 summarizes different synthesis conditions and characteristics for different borides obtained with 2 mmol of metal precursor and 2.5 g of eutectic salt melt LiCl:KC1 (45:55 wt.%) using NaBH₄ in the amounts indicated in Table 1. Heating rate from room temperature to 800 °C is 6.7 °C/min.

**Table 1: Summary of the reaction conditions and characteristics for various metal borides**

| Metal precursor | Initial molar ratio [B]/[M] | Temperature (°C) | Dwell time (h) | Phase (from XRD) | Impurity (from XRD) | Morphology (SEM and TEM) | Surface area (m²·g⁻¹ from BET method applied to N₂ sorption isotherm) |
|---|---|---|---|---|---|---|---|
| HfCl₄ | 4 | 800 | 4 | HfB₂ | -- | Isotropic nanoparticles, diameter 20 nm | 15 |
| NbCl₅ | 8 | 800 | 4 | Nb^{B}2 | - | Isotropic nanoparticles, diameter 20 nm | 120 |
| NiCl₂ | 1 | 800 | 1 | Ni₂B | Ni₃B | "wrapped paper" | 15 |
| FeCl₃ | 8 | 800 | 4 | FeB | - | Isotropic nanoparticles, diameter 30 nm | 200 |
| EuCl₃ | 6 | 800 | 4 | Eu^{B}6 | - | Isotropic nanoparticles, diameter 30 nm | 15 |
| Mac17 | 1 | 800 | 4 | MnB₂ | Mn₂B | - | 250 |

## Claims

1. A process for preparing a metal boride by reaction of a metal source and a boron source, **characterized in that** the reaction is carried out using a molten salt as solvent and the boron source is a hydride-containing boron source.

2. Process according to claim 1, wherein the metal boride is crystalline and the reaction is performed at 1000 °C or less.

3. Process according to claim 1 or 2, wherein the boride is selected from the group consisting of Me₄B, Me₃B, Me₂B, MeB, MeB₂, Me₃B₄, MeB₄, MeB₆, MeB₁₂, preferably Me₂B, MeB, MeB₂ and MeB₄ (wherein Me denotes a metal and B denotes boron), in particular Ni₂B, HfB₂, NbB₂, NiB₂, FeB, FeB₂, CaB₆, EuB₆, CeB₆, MnB₂, MoB₄ and MgB₂.

4. Process according to any of claims 1 to 3, wherein the molten salt comprises at least one selected from the group consisting of alkaline metal halides, earth alkaline metal halides, alkaline metal carbonates, earth alkaline metal carbonates, alkaline sulfates, earth alkaline sulfates, preferably selected from the group consisting of alkaline metal halides and earth alkaline metal halides, and mixtures thereof.

5. Process according to any of claims 1 to 4, wherein the molten salt is a eutectic mixture of at least two salts.

6. Process according to any of claims 1 to 5, which comprises the following steps (a) to (e):
(a) mixing a metal source, a hydride-containing boron source and a salt to be used as molten salt solvent, which is present in the solid state at the mixing temperature;
(b) heating the mixture obtained from step (a) to a temperature higher than the melting point of the salt to be used as molten salt solvent, which temperature is sufficient to form a molten salt reaction mixture, preferably within the range of 300 - 850 °C, and keeping the reaction mixture at this temperature for sufficient time to form a desired metal boride;
(c) cooling the reaction mixture after step (b) below a temperature at which the reaction mixture solidifies, preferably room temperature, in order to obtain a mixture comprising the solidified salt and the solid metal boride;
(d) contacting the solid mixture obtained from step (c) with a solvent that is capable of dissolving the salt, but not capable of dissolving the metal boride, and
(e) separating the solid boride present in the mixture obtained from step (d) from the salt solution formed in step (d) .

7. Process according to any of claims 1 to 6, wherein the metal source is selected from the group consisting of metal salts, preferably metal halides, in particular metal chlorides, metal sulfates, metal nitrates, metal acetates, and metal acetylacetonates.

8. Process according to any of claims 1 to 7, wherein the hydride-containing boron source is selected from the group consisting of alkaline metal borohydrides, preferably lithium borohydride, sodium borohydride and potassium borohydride, more preferably sodium borohydride.

9. Process according to any of claims 1 to 8, wherein the reaction mixture comprises a polarizable anion, preferably bromide and iodide, most preferably iodide.

10. Process according to any of claims 1 to 9, which yields a nanostructured metal boride, preferably in a "wrapped paper" morphology, as porous solid or as distinct particles.

11. Process according to any of claims 1 to 10, which yields a metal boride in the form of particles having a diameter of 2 to 500 nm and/or in the form of a porous solid having a BET surface area of 10 to 800 m²/g.

12. Process according to any of claims 1 to 11, wherein the molar ratio of boron contained in the boron source to metal in the metal source, (boron[moles]/metal[moles]) is in the range of 20/1 to 0.5/1, preferably 8/1 to 1/1.

13. Use of a compound having a polarizable anion in a molten salt reaction mixture for adjusting the particle size and/or morphology of a product produced in said molten salt reaction mixture.

14. Use according to claim 13, wherein the product is a metal boride and the use is made in a process according to any of claims 1 to 12.

15. Metal boride obtainable by a process according to any of claims 1 to 12, which is in the form of particles having a diameter of 5 to 100 nm and/or in the form of a porous solid having a BET surface area of 10 to 800 m²/g.
